# EUROPÄISCHE PATENTSCHRIFT

(11) **EP 0 587 827 B1**
(45) Veröffentlichungstag und Bekanntmachung des Hinweises auf die Patenterteilung: **26.03.1997**
(21) Anmeldenummer: 93902018.6
(22) Anmeldetag: 28.01.1993
(51) Int. Cl.: G05B 19/418, G05B 19/4069

(54) **Verfahren und Vorrichtung zum bidirektionalen Datenaustausch zwischen einer Befehls-/Überwachungsstation und zu steuernden Einheiten**
Process and device for bi-directional data exchange between a command/monitoring station and controlled units
Procédé et dispositif pour un échange de données bidirectionel entre une station de commande/supervision et des unités controllées

(30) Priorität: 31.01.1992 CH 291/92
(43) Veröffentlichungstag der Anmeldung: 23.03.1994
(73) Patentinhaber: PROLINK AG, 5707 Seengen (CH)
(72) Erfinder: WEBER, Fritz, CH-5430 Wettingen (CH)
(74) Vertreter: Ackermann, Ernst
(86) Internationale Anmeldenummer: CH9300023
(87) Internationale Veröffentlichungsnummer: WO9315451

(56) Entgegenhaltungen:
- EP-A- 0 369 188
- EP-A- 0 449 458
- US-A- 4 370 717
- US-A- 5 046 022
- PATENT ABSTRACTS OF JAPAN vol. 13, no. 517 (P-962)20. November 1989 & JP,A,12 09 505
- PATENT ABSTRACTS OF JAPAN vol. 13, no. 263 (P-886)19. Juni 1989 & JP,A,10 58 031

## Beschreibung

Die Erfindung betrifft ein Verfahren sowie eine Vorrichtung zum bidirektionalen Datenaustausch zwischen einer Befehls-/Überwachungsstation und einer oder mehreren zu steuernden Einheiten, wobei Betriebsparameter der zu steuernden Einheiten als Echtzeit-Datenabbild in der Befehls-/Überwachungsstation dargestellt und Steuerbefehle zur Veränderung dieser Betriebsparameter in der Befehls-/Überwachungsstation eingegeben werden.

Solche Verfahren eignen sich insbesondere im Bereich der Visualisierungs- und Leitsystemtechnik wo Datenbilder mit Echtzeitverhalten dargestellt und vom Bediener beeinflusst werden. Sie sind von grossem praktischem Interesse, denn sie ermöglichen eine effiziente, prozessnahe Bedienung rechnergekoppelter Systeme mit kostengünstigen, marktgängigen Übertragungseinrichtungen bei gleichzeitiger Vereinfachung der notwendigen Übertragungsprozeduren und verbesserter Nutzung bestehender Übertragungskapazitäten.

Es sind bereits Verfahren zum bidirektionalen Datenaustausch zwischen Computer- und/oder Steuersystemen bekannt, bei denen entweder die Übertragungsgeschwindigkeit erhöht - oder bestimmte Daten bevorzugt behandelt werden (Prioritätssteuerung). Auch sind Verfahren zur schnellen Reaktion am Bildschirm bekannt, bei denen der Bediener im wesentlichen auf ein bevorstehendes Warten bis zur Verarbeitung seiner Eingabe aufmerksam gemacht wird (lokales Echo). Der heutige Trend geht allgemein in Richtung leistungsstärkerer Systeme (Lichtleiter, Multiprozessoren) mit immer kürzeren Verarbeitungs- und damit Reaktionszeiten. Das Warten bis zur Verarbeitung einer Eingabe ist für den Bediener nicht nur lästig, sondern es verhindert oft ein Echtzeitverhalten und damit eine vernünftige Handhabung eines Prozesses, insbesondere bei einfacheren Computersystemen. Oft ist das Problem gar nicht ein langsamer Datenverkehr sondern die simple Tatsache, dass ein an sich schnelles Netzwerk momentan überlastet ist und das System dem Bediener keine Antwort in der von ihm erwarteten Zeit geben kann. Der vermehrte Einsatz rechnergekoppelter und vernetzter Systeme fordert daher stets höhere Übertragungsleistungen die heute nur mit modernster Technologie (Hardware), mit komplizierten Übertragungsprozeduren (Firmware, Software) oder erheblichem Datenverwaltungsaufwand erreicht werden. Trotz fortgeschrittener Technik ist der Einsatz modernster Technologie in kleineren und mittleren Anlagen oft finanziell nicht tragbar. Prioriritätsgesteuerte Übertragungen sind in der Regel herstellergebunden, meistens nicht offen und wenn nicht bereits auf dem Markt verfügbar, ebenfalls zu teuer. Solche Übertragsarten gehen aber immer zu Lasten der Gesamtübertragungsleistung eines Systems, weil ja die vorgegebene mittlere Übertragungsgeschwindigkeit nicht erhöht wird, die aufwendigere Übertragungsprozedur jedoch zusätzlich verarbeitet werden muss.

Die US-PS Nr. 5 046 022 zeigt ein Verfahren bei dem vorerst eine Simulation schrittweise modelliert und als geplanter Pfad gespeichert wird bevor, nach Begutachtung dieser Vorausplanung, eine Befehlsausgabe entsprechend dem gespeicherten Pfad wissentlich ausgelöst wird. Diese Art der Vorausplanung und Speicherung der Befehle zur allfälligen Modifikation entspricht grundsätzlich dem Konzept "Trial and Error". Dabei wird die Simulation eines Roboterarmes bewerkstelligt, indem eine Sequenz von Befehlen, vor einer allfälligen Ausführung sukzessive gespeichert, modifiziert und in Form eines Simulierbildes dem Bediener zur vorgängigen Begutachtung dargestellt wird. Es handelt sich um ein schrittweises Vorgehen, wobei geplant und modifiziert werden kann, ehe überhaupt ein Befehl die lokale Station verlässt. Möglicherweise bewegt sich der Gegenstand, welcher vom Roboterarm gefasst werden soll. Das Prozessabbild ist dann aber nicht statisch, d.h. der Gegenstand ist wegen der Übertragungszeitverzögerung nie dort, wo ihn der lokale Monitor gerade anzeigt: der Gegenstand ist für den Roboter der US-PS Nr. 5 046 022 nicht fassbar weil die notwendigen Bewegungen des Roboterarmes für dynamische Prozesse gar nicht im voraus geplant werden können. Das Simulierbild wird lediglich dem Video-Bild überlagert, um den geplanten oder zu planenden Bewegungsablauf des Roboterarmes darzustellen, d.h. das Video-Bild wird als solches nicht verändert oder bearbeitet um z.Bsp. als Simulierbild bei der Befehlsausgabe dargestellt zu werden. Das Konzept der US-PS ist nicht ohne weiteres auf eine Zukunft mit intelligenten Systemen gerichtet, die in der Lage sind, komplexe Befehle eigenständig auszuführen.

Der Erfindung wurde die Aufgabe zugrunde gelegt, mit marktgängigen Übertragungssystemen die Übertragungszeit beim bidirektionalen Datenaustausch virtuell zu verkürzen insbesondere eine Systemreaktion mit Echtzeitverhalten zu erreichen, um dem Bediener eine vernünftige Handhabung eines Prozesses zu ermöglichen, wobei Echtzeit-Datenabbilder von Computer- und/oder Steuersystemen verändert werden können und allenfalls bestehende Übertragungsprozeduren verwendbar sind.

Das erfindungsgemässe Verfahren ist dadurch gekennzeichnet, dass das Echtzeit-Datenabbild mit der Eingabe neuer Steuerbefehle in der Befehls-/Überwachungsstation abhängig von diesen Steuerbefehlen verändert und als simuliertes Datenabbild vom Echtzeit-Datenabbild dargestellt wird und die dem veränderten Echtzeit-Datenabbild entsprechenden Befehle von der Befehls-/Überwachungsstation an die zu steuernden Einheiten übermittelt werden, wobei das simulierte Datenabbild während der Übertragung der Befehle sowie der Übertragungszeit für die Rückmeldung der veränderten Betriebsparameter für eine Zeitspanne erhalten bleibt und die aufgrund der Befehle veränderten Betriebsparameter in die Befehls-/Überwachungsstation zurückgemeldet werden und das Echtzeit-Datenabbild nach Ablauf der Zeitspanne mit den veränderten Betriebsparametern auf den neuesten Stand gebracht wird.

Die erfindungsgemässe Vorrichtung ist dadurch gekennzeichnet, dass das Echtzeit-Datenabbild mit der Eingabe neuer Steuerbefehle in die Befehls-/Überwachungsstation abhängig von diesen Steuerbefehlen veränderbar und als simuliertes Datenabbild vom Echtzeit-Datenabbild darstellbar ist, wobei die dem veränderten Echtzeit-Datenabbild entsprechenden Befehle an die zu steuernden Einheiten übermittelbar sind, derart, dass das simulierte Datenabbild während der Übertragungszeit für die Rückmeldung der veränderten Betriebsparameter für die Zeitspanne erhalten bleibt, wobei die aufgrund der Befehle veränderten Betriebsparameter in die Befehls-/Überwachungsstation zurückgemeldet werden und das Echtzeit-Datenabbild nach Ablauf der Zeitspanne mit den veränderten Betriebsparametern auf den neuesten Stand bringbar ist.

Entgegen den heute allgemein üblichen Anstrengungen liegt die Lösung mit dem beschriebenen Verfahren beziehungsweise mit der dazu dienenden Vorrichtung also keineswegs ausschliesslich in schnelleren oder generell leistungsfähigeren Systemen. Vielmehr wird dem Bediener die zu erwartende Antwort sofort lokal mitgeteilt (Aktion= Reaktion) und gegebenenfalls später korrigiert (Management by Exception), sollte sie nicht zutreffen, beziehungsweise erfüllt werden können: Ist ein erlaubter Befehl nach Ablauf der zulässigen Reaktionszeit nämlich nicht erfüllt, so ist es gemäss heutiger Technik sinnvoller, den Bediener mit einer entsprechenden Fehlermeldung zu informieren als etwa einen Folgebefehl zuzulassen. Letzteres veranlasst den Bediener nur zum wiederholten sinnlosen Tastendrücken. Unerlaubte Eingriffe können andererseits problemlos vor der Befehlsübermittlung abgefangen und mit einer entsprechenden Fehlermeldung begleitet werden.

Die Erfindung zielt darauf ab, Echtzeitdaten (Rückmeldungen, Sollwerte), welche auch von anderer Stelle (etwa dem Steuersystem) generiert werden können, normalerweise prozessgetreu im lokalen System abzubilden und nur im Befehlsfalle während der Übertragung kurzzeitig zu simulieren. Der Bediener sieht so auf Tastendruck den von ihm befohlenen Zustand am Bildschirm, ohne die Befehls-Übertragungszeit beziehungsweise die wirkliche Antwort des Systems abwarten zu müssen. Die Simulation beziehungsweise Vorhersage des Echtzeit-Datenabbildes erzeugt die schnellst mögliche Befehls-Reaktion des Systems mit dem Vorteil, dass die Kommunikation im Befehlsfalle nicht beeinträchtigt werden muss. Damit entfällt eine entsprechende Prioritätssteuerung und die Kommunikationsleistung steht für einen optimierten Gesamtdatendurchsatz voll zur Verfügung.

Ein weiterer Vorteil ist ein erhöhter Bedienkomfort aufgrund der Simulation: Das Warten bis zur Verarbeitung einer Eingabe entfällt, der Bediener kann jederzeit nach seinem Ermessen sofort die nächste Aktion ausführen und damit auch schnelle Bedienfolgen erfüllen oder effizienter arbeiten.

Das erfindungsgemässe Verfahren gestattet verschiedene Modi. So können unabhängig von den IST-Betriebsparamtern eine den Steuerbefehlen (zu) gehorchende Änderung der Betriebsparameter besonders für die Zeit der Übertragung mit der, beziehungsweise den zu erwartenden Rückmeldung(en) der IST-Betriebsparameter als Voraussage im Echtzeitbild in der Befehls-/Überwachungsstation zeitgleich mit der Eingabe der Steuerbefehle simuliert werden. Anders ausgedrückt wird hierbei eine Änderung der Betriebsparameter mit der zu erwartenden Rückmeldung als Voraussage im Echtzeitbild zeitgleich mit der Eingabe simuliert. Rückmeldung kann auch als Rückantwort (Feedback), Voraussage als Vorhersage, Vorankündigung, Prognose beziehungsweise Simulation verstanden werden.

Bei einer weiteren Option wird unabhändig von den IST-Betriebsparamtern - eine den Steuerbefehlen (zu) gehorchende Änderung der Betriebsparamter als Simulierbild in der Befehls-/Überwachungsstation für die Zeit der Übertragung mit der (den) zu erwartenden Rückmeldung(en) der IST-Betriebsparameter als Voraussage zeitgleich mit der Eingabe der Steuerbefehle dargestellt. Wiederum vereinfacht ausgedrückt, wird eine Änderung der Betriebsparameter als Simulierbild mit der zu erwartenden Rückmeldung als Voraussage zeitgleich mit der Eingabe dargestellt, beziehungsweise eine Änderung der Betriebsparameter mit der zu erwartenden Rückmeldung als Voraussage zeitgleich mit der Eingabe als Simulierbild dargestellt wird.

Ferner wird gemäss einer dritten Option - unabhängig von den IST-Betriebsparametern - eine den Steuerbefehlen (zu) gehorchende Änderung der Betriebsparameter durch (unmittelbare) Simulation der zu erwartenden IST-Betriebsparameter (im Echtzeitbild) angezeigt und (für die Zeit der Übertragung) als Simulierbild in der Befehls-/Überwachungsstation zeitgleich mit der Eingabe der Steuerbefehle dargestellt. Dabei wird eine Änderung der Betriebsparameter durch Simulation der zu erwartenden IST-Betriebsparameter angezeigt und als Simulierbild zeitgleich mit der Eingabe dargestellt, beziehungsweise eine Änderung der Betriebsparameter wird durch Simulation der zu erwartenden IST-Betriebsparameter zeitgleich mit der Eingabe angezeigt und als Simulierbild dargestellt. Das Simulierbild kann zum Beispiel in rot, das spätere Echtzeitbild nach vollständigem Abschluss der Eingabeverarbeitung in der zu steuernden Einheit grün dargestellt werden.

Bei einer weiteren besonders vorteilhaften Ausgestaltung des Verfahrens zum bidirektionalen Datenaustausch zwischen einer Befehls-/Überwachungsstation und einer oder mehreren zu steuernden Einheit(en) werden
a) in der Befehls-/Überwachungsstation Steuerbefehle in eine erste Ein/Ausgabe-Schnittstelle eingegeben und von dort an die jeweils zu steuernde(n) Einheit(en) weitergeleitet und
b) IST-Betriebsparameter der zu steuernden Einheit(en) zu ihrer Echtzeitwiedergabe über die erste Ein/Ausgabe-Schnittstelle an die Befehl-/Überwachungsstation rückgemeldet, und ist dadurch gekennzeichnet, dass
c) - unabhängig von den IST-Betriebsparametern - eine den Steuerbefehlen gehorchende Änderung der Betriebsparameter auf einem Simulierbild in der Befehl-/Überwachungsstation zeitgleich mit der Eingabe der Steuerbefehle simuliert wird.

Die Erfindung geht in Fällen von Steuersystemen unter anderem auch von der Tatsache aus, dass nach Eingabe von zum Beispiel einer neuen Stellgrösse, im Verarbeitungsprozess Korrekturen vorgenommen werden, die in der Mehrzahl der Fälle weitere Prozessfolgen mit Änderung anderer Daten zur Folge haben. Dies bedeutet nun aber, dass der Nutzen einer bis ins Extreme getriebenen Erhöhung der Übertragungsgeschwindigkeit nur relativen Wert hat, da in dem Verarbeitungsprozess Änderungen nur in völlig anderen, beziehungsweise viel grösseren Zeitdimensionen durchführbar sind. Entscheidend ist die sofortige Quittierung einer Eingabe in dem Simulierbild, mit der Gewissheit, dass die Steueranlage in der je erforderlichen Zeit alle Folgemassnahmen automatisch korrekt durchführt und gegebenenfalls sogar den Befehl mit einem entsprechenden Hinweis an den Bediener verwirft oder korrigiert oder mit Alarm reagiert. Dem Bediener wird also für die Zeit der Informationsübertragung das Simulierbild zugänglich gemacht, das heisst, für ihn erfolgt die Reaktion dem Verhalten nach (virtuell) in Echtzeit, während die Information im Hintergrund das Zielsystem erreicht und von dort als Echtzeit-Datenabbild umgehend wieder erarbeitet und zurück gesendet wird (bidirektional). Die Echtzeit-Daten für die Bedienstation entsprechen damit einem Abbild von Echtzeit-Daten im Zielsystem, welches vorzugsweise als Steuersystem eine Anlage überwacht, steuert und/oder regelt. Die Bedienstation ist über eine konventionelle Einrichtung zur Kommunikation mit dem Steuersystem verbunden, so dass Echtzeit-Daten aus dem Steuersystem bidirektional über einen Empfangskanal gelesen und über einen Sendekanal in das Steuersystem geschrieben werden können. Dabei ist die Art und Weise der Übertragung (Hardware und Software) für das Verfahren unerheblich und deshalb frei wählbar. Unabhängig von den Eingaben beziehungsweise Simulationen an der Bedienstation kann das Ziel- beziehungsweise Steuersystem das Echtzeit-Datenabbild oder Teile davon jederzeit auch beeinflussen und gegebenenfalls dominieren. Nach einer Eingabe an der Bedienstation und Ablauf der Verzögerung wird dort jeweils immer wieder automatisch das Echtzeit-Datenabbild aus dem Steuersystem dargestellt. Auf diese Weise lässt sich ein bestimmtes Echtzeit-Datenabbild beziehungsweise Teilbild in zwei oder mehreren unabhängigen Computer- und/oder Steuersystemen beeinflussen und dem Verhalten nach in Echtzeit veränderbar machen.

Das Verfahren erlaubt jedoch zusätzlich Multiuser Anwendungen und bedarf keines sogenannten Record Locking für das Echtzeit-Datenabbild, da bevorzugt stets der zeitlich letzte, zugelassene Eingriff Gültigkeit hat.

Für das Verfahren wird ein Software-Programm beziehungsweise Simuliermittel für die Bedienstation mit Datenspeicher für Echtzeit-Daten pro bedienbarem Element (Datenpunkt) benutzt. Zentraler Teil des Verfahrens ist ein Programmteil mit vorzugsweise individuellen Verzögerungsgliedern für sämtliche zu bedienenden Elemente, wobei die Verzögerung entsprechend der Übertragungszeit für die Kommunikation automatisch angepasst werden kann. Eine Änderung des Datenbildes über die Ein/Ausgabeschnittstelle der Bedienstation wird von diesem Programmteil erfasst, wobei gleichzeitig mit der Übermittlung der Eingabeinformation eine Simulation beziehungsweise Vorhersage des Echtzeit-Datenbildes erfolgt, indem die geänderten Daten als Simulierdaten anstelle der Echtzeit-Daten während der Verzögerung gespeichert werden. Dabei ist entscheidend, dass Änderungen, hervorgerufen durch Echtzeit-Daten aus dem Steuersystem, nicht zu einer Simulation führen, das heisst Empfangs- und Sendepfad werden durch den Programmteil getrennt, so dass keine unerwünschte Rückkopplung stattfinden kann. Die Simulierdaten werden insbesondere für die geänderten Werte vorzugsweise solange aufrechterhalten, bis die Übertragung und Rückmeldung des geänderten Echtzeit-Datenabbildes über die Kommunikation vollständig abgeschlossen ist.

Eine schnellere Reaktion kann erreicht werden indem die Speicheradressen für das Simulierbild identisch mit den Speicheradressen für das Echtzeit-Datenabbild gewählt werden. Um den Datenverwaltungsaufwand zu verringern und damit den Verarbeitungsprozess zu beschleunigen, können sowohl Daten von Teilbildern wie auch Daten von mehreren Bildern gemeinsam als Echtzeit-Datenabbild bearbeitet werden. Echtzeit-Daten können auch für nicht sichtbare Bilder im Hintergrund fortwährend aufgefrischt werden, so dass die Daten für einen Zugriff jederzeit mit schnellst möglicher Reaktion als Echtzeit-Datenabbild verfügbar sind. Sende- und Empfangskanäle können mit herkömmlichen, kostengünstigen Kommunikationseinrichtungen über den gleichen Pfad geführt werden, wobei die Speicheradressen der Echtzeit-Daten im empfangenden Ziel- beziehungsweise Steuersystem zur Emulation eines sogenannten Dualport RAM (Random Access Memory) für Sende- und Empfangsinformationen identisch gewählt werden können.

Im Übertragungspfad kann sendeseitig ein Multiplexerprogramm zur Vielfach-Adressierung eingebaut werden. Die zurückempfangene Information für das Echtzeit-Datenabbild muss nicht zwangsweise identisch mit der gesendeten Information aus dem Simulierbild sein, ein Decoder-/Encoderprogramm im Empfangs- beziehungsweise Sendepfad sorgt dafür, dass die Informationen für Echtzeit-Datenabbild und Simulierbild komprimierter sind. Gleichzeitig können damit Datentyp-Umwandlungen und/oder Skalierungen beziehungsweise Normierungen vorgenommen werden. Ein Mehrfach-Decoder/ Encoder Programm mit Ein/ Ausgabeschnittstellen für mehrere Ebenen ermöglicht zudem die direkte Simulation verschiedener Datenformate gleichzeitig. Sowohl Multiplexer wie auch Decoder- beziehungsweise Encoderfunktionen bewirken eine Entlastung der Kommunikation weil damit die Daten codiert, das heisst in komprimierter Form übertragen werden.

Die Erfindung betrifft eine Vorrichtung und umfasst für den Bereich der Eingabeeinrichtung ein Software-Programm, das es ermöglicht, dass insbesondere während der Übertragungszeit, von dem Echtzeit-Datenabbild ein Simulierbild herstellbar und im Simulierbild die Veränderung zeitgleich mit der Eingabe vornehmbar ist. Entsprechend dem Verfahren sind auch bei der Vorrichtung mehrere vorteilhafte Optionen möglich.

So können durch die Simuliermittel, die - unabhängig von den IST-Betriebsparametern - eine den Steuerbefehlen gehorchende Änderung der Betriebsparameter als Voraussage der zu erwartenden IST-Betriebsparameter (für die Zeit der Übertragung) auf einem Simulierbild in der Befehls-/Überwachungsstation zeitgleich mit der (den) Eingabe(n) der Steuerbefehle dargestellt werden. Durch die Simuliermittel wird die Änderung der Betriebsparameter als Voraussage der zu erwartenden IST-Betriebsparameter auf einem Simulierbild zeitgleich mit der Eingabe dargestellt. Simuliermittel können als Simulator und die entsprechende Einrichtung für die Simulationsfunktion auch als Simulationsvorrichtung beziehungsweise Simulationseinrichtung bezeichnet werden.

Gemäss einer weiteren Option simulieren die Simuliermittel, die - unabhängig von den IST-Betriebsparamtern - eine den Steuerbefehlen gehorchende Änderung der Betriebsparamter als Voraussage der zu erwartenden IST-Betriebsparameter (für die Zeit der Übertragung) im Echtzeitbild der Befehls-/Überwachungsstation zeitgleich mit der (den) Eingabe(n) der Steuerbefehle. Die Simuliermittel simulieren eine Änderung der Betriebsparameter als Voraussage der zu erwartenden IST-Betriebsparamter im Echtzeitbild zeitgleich mit der Eingabe.

Gemäss einer weiteren besonders vorteilhaften Ausgestaltung wird eine Vorrichtung zum bidirektionalen Datenaustausch zwischen einer Befehls-/Überwachungsstation und einer oder mehreren zu steuernden Einheit(en), insbesondere zur Durchführung des Verfahrens mit
a) einer ersten Ein/Ausgabe-Schnittstelle und einer Datenübertragungseinrichtung, die
   a.1) zur Aufnahme von Steuerbefehlen aus der Befehls-/Überwachungsstation und deren Weiterleitung an die jeweils zu steuernde(n) Einheit(en) und
   a.2) zur Echtzeit-Rückmeldung der IST-Betriebsparameter der zu steuernden Einheit(en) an die Befehls-/Überwachungsstation ausgelegt und ist gekennzeichnet durch
b) Simuliermittel, die - unabhängig von den IST-Betriebsparametern - eine den Steuerbefehlen gehorchende Änderung der Betriebsparameter auf einem Simulierbild in der Befehls-/Überwachungsstation zeitgleich mit den Eingaben der Steuerbefehle simulieren.

Durch Simuliermittel wird eine Änderung der Betriebsparameter auf einem Simulierbild zeitgleich mit den Eingaben simuliert. Zentraler Teil der Vorrichtung ist dabei ein Programmteil mit vorzugsweise individuellen Verzögerungsgliedern für sämtliche bedienbare Elemente (Datenpunkte), wobei die Verzögerung entsprechend der Übertragungszeit für die Kommunikation angepasst werden kann. Zusätzlich umfasst die Vorrichtung vorzugsweise einen Decoder zur Umwandlung (Decodierung, Skalierung) der empfangenden Echtzeit-Daten und einen Encoder zur Rückwandlung (Codierung, Normierung) der zu sendenden Daten. Die Veränderung des Echtzeit-Datenabbildes durch den Bediener wird vorzugsweise über eine Tastatur oder mit einer sogenannten Pointing Device vorgenommen, wobei das Echtzeit-Datenabbild auf einem Bildschirm dargestellt werden kann. Dabei können Echtzeit-Datenabbilder für den Bereich der Haustechnik oder für Industrieanlagen mit Echtzeit-Daten von/für Maschinen, Anlagen, Motoren und Ventilen sowie deren Mess-, Steuer- und Regeleinrichtungen dargestellt werden.

In der Folge wird nun die erfindungsgemässe Lösung mit weiteren Einzelheiten anhand mehrerer Ausührungsbeispielen erläutert.

Es zeigen:
- die Figur 1:: das der Erfindung zugrunde liegende Prinzipschaltbild mit den wichtigsten Programmelementen in Bedienstation und Steuersystem sowie dem Informations-Datenfluss (Doppellinie) wenn keine Eingabe stattfindet;
- die Figur 2:: zeigt Figur 1 während einer Eingabe und deren Übertragung;
- die Figur 3:: als Vergleich zu Figur 1, die prinzipielle Darstellung eines Dualport RAM (Random Access Memory);
- die Figur 4:: zeigt den Datenfluss mit zeitgleichem Ablauf a)-->b)-->c) bei einer vom Steuersystem akzeptierten Eingabe zur Steuerung eines Motors;
- die Figur 5:: zeigt Figur 4 bei einer vom Steuersystem nicht akzeptierten Eingabe zur Steuerung eines Motors;
- die Figur 6:: zeigt analog Figur 4 den Datenfluss mit zeitlichem Ablauf a)-->b)-->c)-->d) bei einer vom Steuersystem akzeptierten Eingabe eines Sollwertes und eine spätere, automatische Veränderung des Sollwertes durch das Steuersystem;
- die Figur 7:: eine Mehrfachanwendung der Erfindung im Netzverbund mit den wichtigsten Programmelementen der einzelnen Stationen;
- die Figur 8:: eine Anwendung der Erfindung für sogenanntes Multiplexed Writing mit den wichtigsten Programmelementen für Bedienstation und Steuersystem;
- die Figur 9:: eine Anwendung der Erfindung für Testzwecke bei unterbrochenem Datenfluss;
- die Figur 10:: eine Anwendung der Erfindung als sogenannter interner Encoder / Decoder bei kurzgeschlossenem Datenfluss;
- die Figur 11:: eine Anwendung der Erfindung mit Datenfluss für ein Mehrfach-Decoder/Encoder Programm;
- die Figur 12:: eine Anwendung der Erfindung nach Figur 11 mit Datenfluss für die direkte Decodierung/ Encodierung eines Nibbles zur Statusanzeige von Anlagen am Bildschirm;
- die Figur 13:: zeigt das vereinfachte Flussdiagramm des Programms (Flowchart) beziehungsweise der Simuliermittel für einen einzigen Datenpunkt;

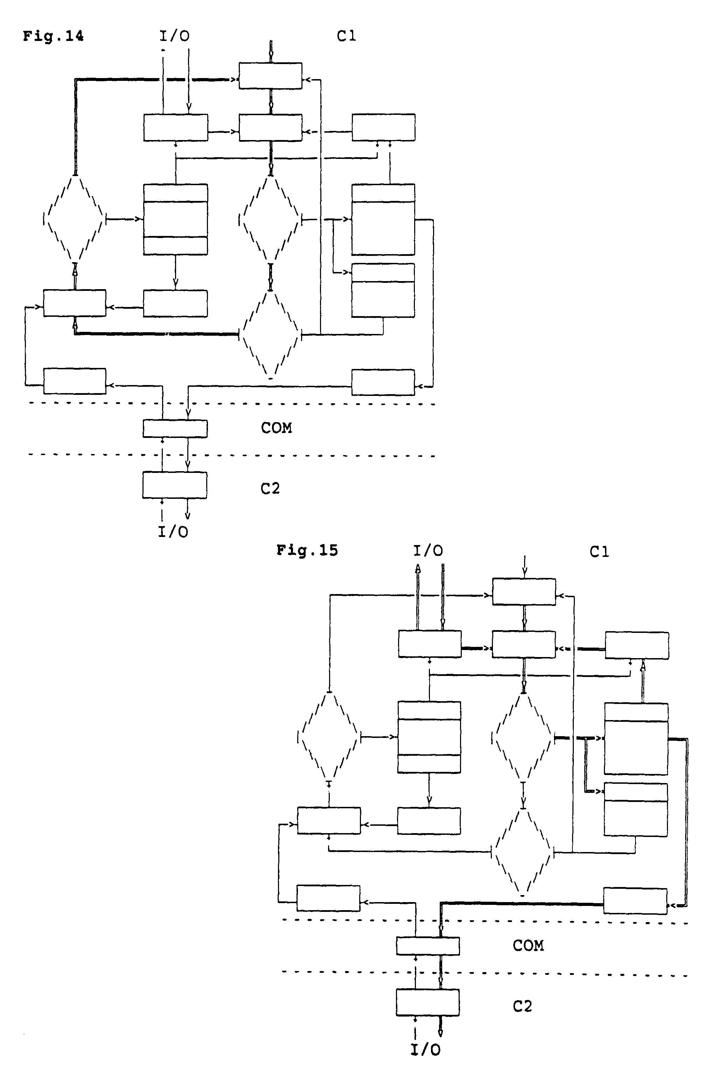

- die Figur 14:: zeigt das vereinfachte Flussdiagramm Figur 13 mit dem Funktionsablauf (Doppelline) wenn keine I/O Ein/Ausgabe-Änderungen stattfinden (Idle);

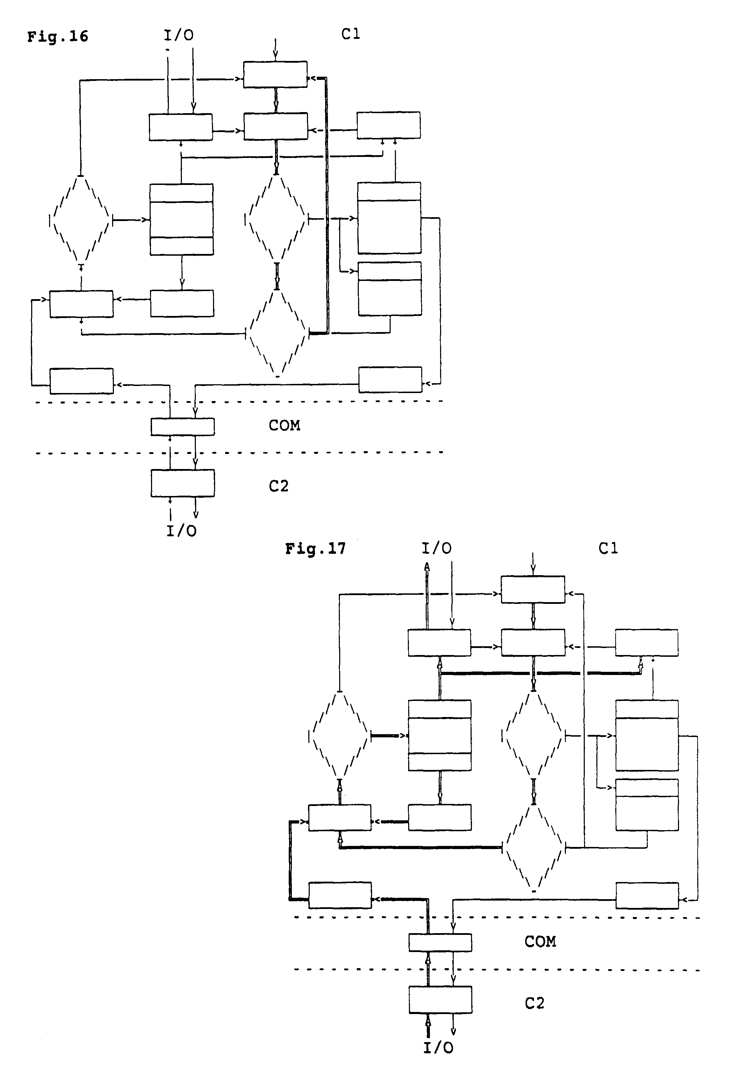

- die Figur 15:: zeigt das vereinfachte Flussdiagramm Figur 13 mit dem Funktionsablauf (Doppellinie) bei einer Eingabe-Änderung in der Befehls-Überwachungsstation (Send);
- die Figur 16:: zeigt das vereinfachte Flussdiagramm Figur 13 mit dem Funktionsablauf (Doppelline) nach einer Eingabe-Änderung in der Befehls-Überwachungsstation während der Übertragung (Transmission);
- die Figur 17:: zeigt das vereinfachte Flussdiagramm Figur gur 13 mit dem Funktionsablauf (Doppellinie) bei einer Änderung der Empfangsdaten in der Befehls-Überwachungsstation (Receive);

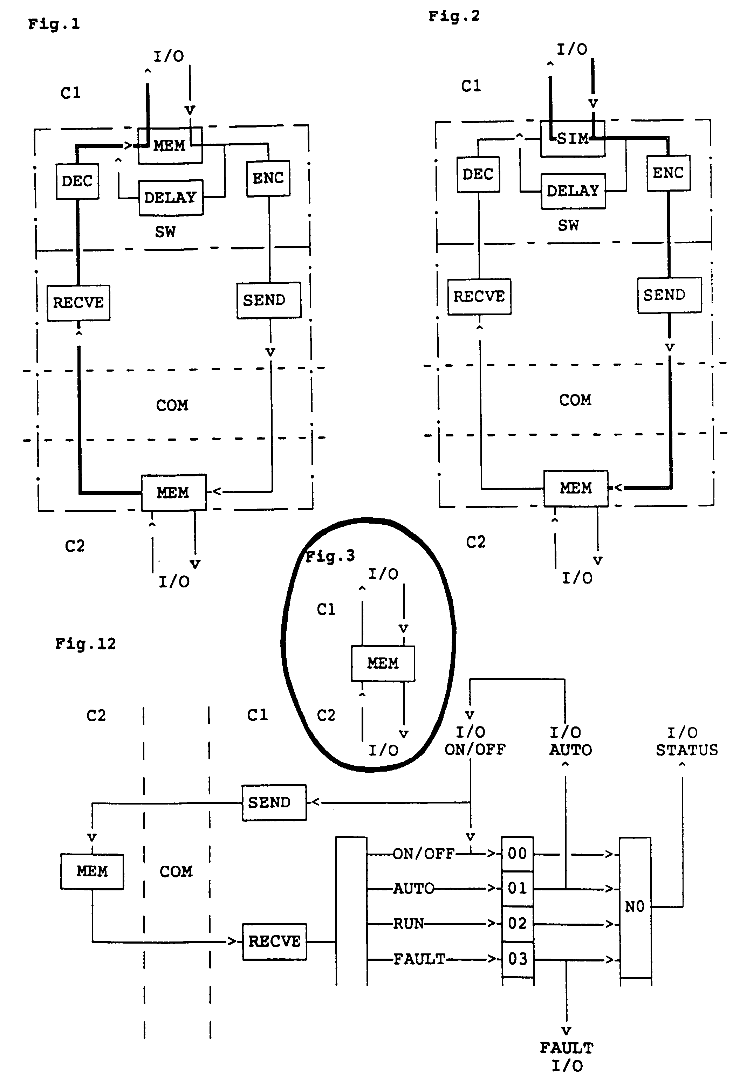

Nachfolgend sei nun jeweils auf die entsprechenden Figuren verwiesen: Figur 1 und Figur 2 zeigen das der Erfindung zugrunde liegende Prinzipschaltbild mit den wichtigsten Funktionen. In Figur 1 ist der Informations-Datenfluss (Doppellinie) für das Echtzeit-Datenabbild dargestellt, wenn keine Eingabe an der Bedienstation C₁ stattfindet. Figur 2 zeigt den entsprechenden Datenfluss während einer Eingabe an der Bedienstation C₁. Dem Verfahren liegt ein Sofware-Programm SW (oberes strichpunktiertes Rechteck) für die Bedienstation C₁ mit Datenspeicher für Echtzeit-Daten MEM pro bedienbarem Element zugrunde. Die Echtzeit-Daten MEM für die Bedienstation C₁ entsprechen einem Abbild von Echtzeit-Daten MEM im Steuersystem C₂. Bedienstation C₁ ist über eine konventionelle Einrichtung zur Kommunikation COM (gestrichelte Trennlinien) mit dem Steuersystem C₂ verbunden, so dass Echtzeit-Daten MEM aus dem Steuersystem C₂ bidirektional über einen Empfangskanal RECEIVE gelesen und über einen Sendekanal SEND ist das Steuersystem C₂ geschrieben werden können. Dabei ist die Art und Weise der Übertragung (Hardware und Software) für das Verfahren unerheblich und deshalb frei wählbar. Das Software-Programm SW umfasst vorzugsweise einen Decoder DEC zur Umwandlung (Decodierung, Skalierung) der empfangenden Echtzeit-Daten MEM und einen Encoder ENC zur Rückwandlung (Codierung, Normierung) der zu sendenden Daten.

Zentraler Teil des Verfahrens ist ein Programmteil mit vorzugsweise individuellen Verzögerungsgliedern für sämtliche zu bedienenden Elemente, wobei die Verzögerung DELAY entsprechend der Übertragungszeit für die Kommunikation COM angepasst werden kann. Eine Änderung des Datenbildes über die Ein/Ausgabeschnitstelle I/O der Bedienstation C₁ wird von diesem Programmteil erfasst, wobei gleichzeitig mit der Übermittlung der Eingabeinformation eine Simulation beziehungsweise Vorhersage des Echtzeit-Datenabbildes erfolgt, indem die geänderten Daten als Simulierdaten SIM anstelle der Echtzeit-Daten MEM während der Verzögerung DELAY gespeichert werden. Dabei ist entscheidend, dass Änderungen, hervorgerufen durch Echtzeit-Daten MEM aus dem Steuersystem C₂, nicht zu einer Simulation führen, das heisst, Empfangsund Sendepfad werden durch den Programmteil getrennt, so dass keine unerwünschte Rückkopplung stattfinden kann. Die Simulierdaten SIM werden solange aufrecht erhalten, bis die Übertragung und Rückmeldung des geänderten Echtzeit-Datenabbildes über die Kommunikation COM vollständig abgeschlossen ist. Unabhängig von den Eingaben beziehungsweise der Simulationen an der Bedienstation C₁ kann das Steuersystem C₂ das Echtzeit-Datenabbild oder Teile davon jederzeit auch beeinflussen und gegebenenfalls dominieren. Nach einer Eingabe an der Bedienstation C₁ und Ablauf der Verzögerung DELAY wird dort jeweils immer wieder automatisch das Echzeit-Datenbild aus dem Steuersystem C₂ dargestellt. Auf diese Weise lässt sich ein bestimmtes Echtzeit-Datenabbild beziehungsweise Teilbild in zwei oder mehreren unabhängigen Computer- und/oder Steuersystemen beeinflussen und dem Verhalten nach in Echtzeit veränderbar machen.

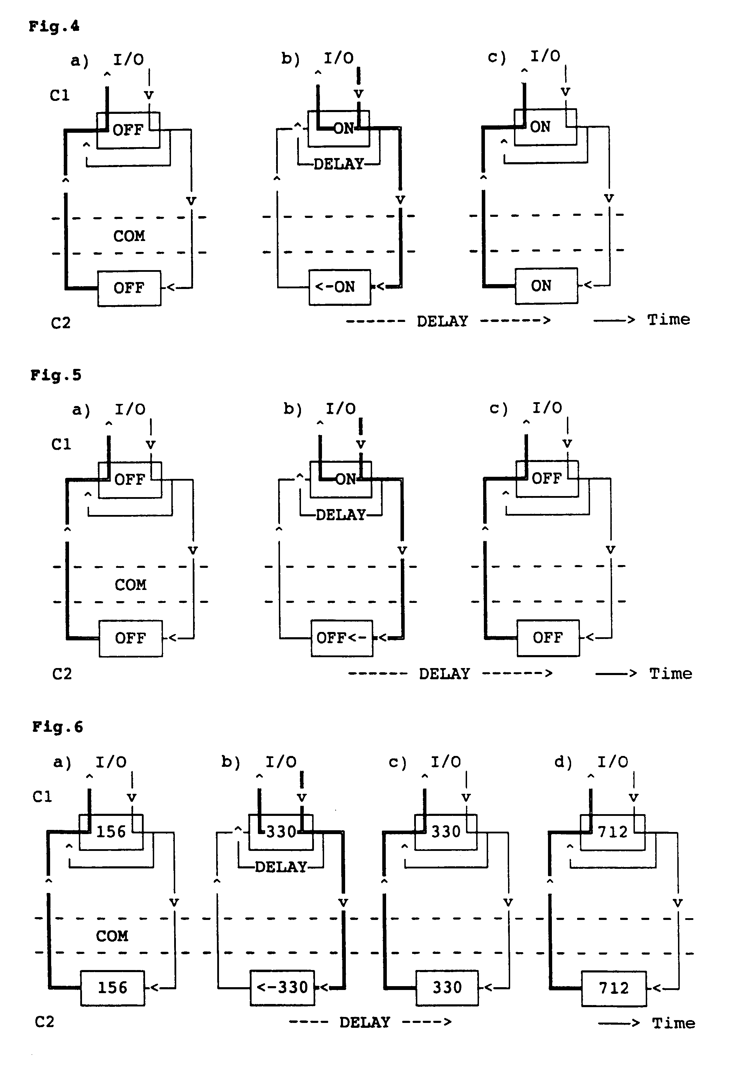

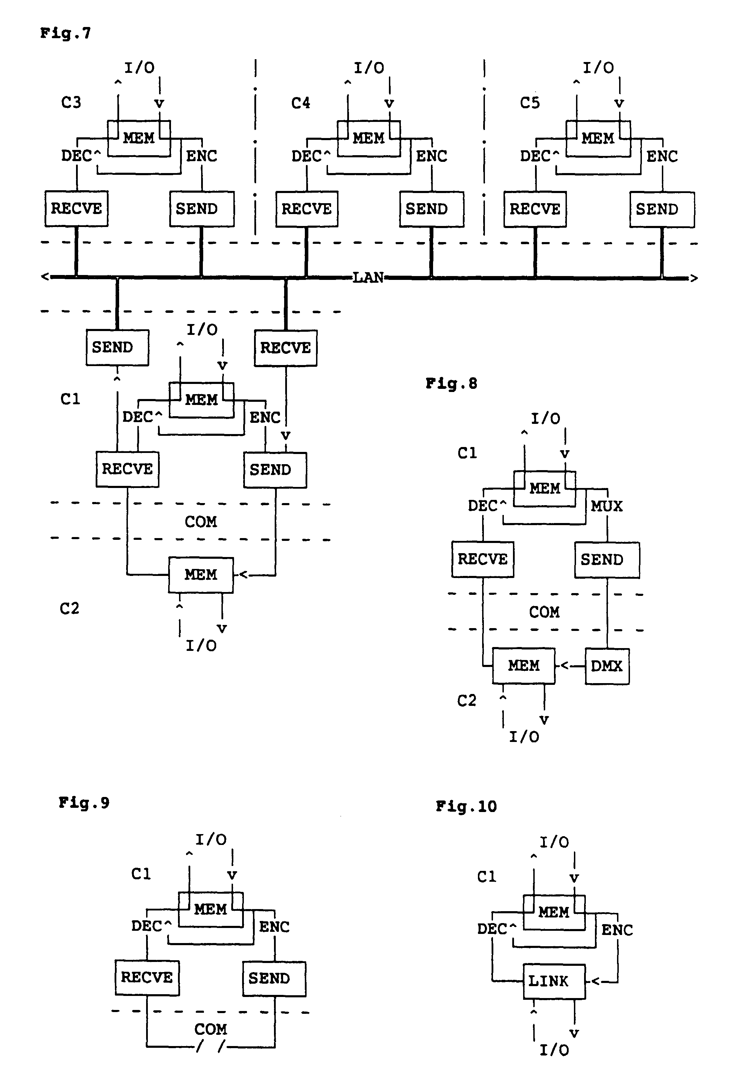

Das gesamte System mit Ein/Ausgabeschnittstelle I/O, Echtzeit-Daten MEM, Bedienstation C₁, Kommunikation COM und Steuersystem C₂ (strichpunktiertes grosses Rechteck) kann gemäss Figur 3 mit einem Dualport RAM verglichen werden. Das Verfahren erlaubt jedoch zusätzlich Multiuser Anwendungen wie für Figur 7 beschrieben.

Figur 3 zeigt zum Vergleich mit Figur 1 und Figur 2 die prinzipielle Darstellung eines Dualport RAM (Random Access Memory). Beim Dualport RAM handelt es sich um einen Speicher-Baustein auf den mit zwei unabhängigen Bussystemen zugegriffen werden kann.

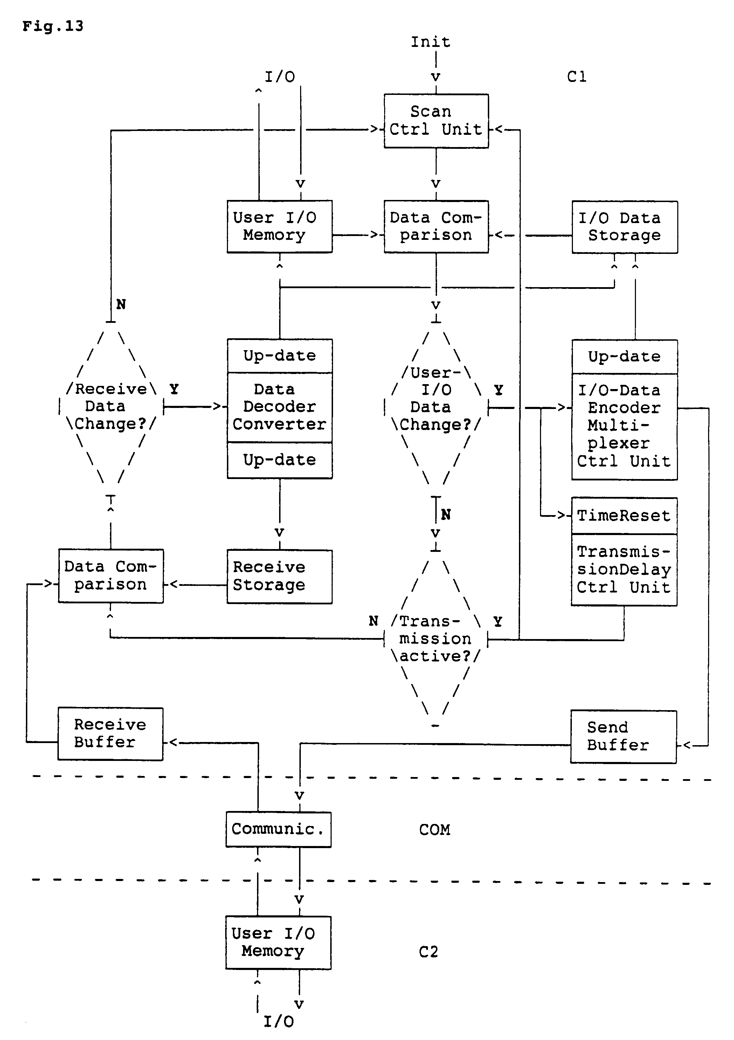

Figur 4 und Figur 5 zeigen ein vereinfachtes Beispiel mit zeitlichem Ablauf a)-->b)-->c) für den Datenfluss (Doppellinie) zur Steuerung und Visualisierung eines Motors. Dabei wird ein Motor für die Zustände ON und OFF auf dem Bildschirm der Bedienstation C₁ dargestellt. Der Motor kann sowohl von der Bedienstation C₁ wie auch vom Steuersystem C₂ jederzeit ein- oder ausgeschaltet werden, wobei der Bediener immer (in Echtzeit beziehungsweise mit der Verzögerungszeit der Übertragung) über den aktuellen Zustand des Motors informiert ist. In der Regel dominiert das Steuersystem C₂ indem es durch Verriegelungsschaltungen die Befehle von der Bedienstation C₁ zulässt oder nicht erlaubt.
a) Angenommen der Motor sei ausgeschaltet und eine Bedienung sei zur Zeit nicht erfolgt, so ist die Ein/Ausgabeschnittstelle I/O über das für Figur 1 beschriebene Software-Programm auf Empfang geschaltet und zeigt den zurückgemeldeten Zustand OFF des Motors an.
b) Im Falle einer Eingabe an Ein/Ausgabeschnittstelle I/O wird automatisch auf Senden umgeschaltet und die Anzeige entspricht während der Übertragungszeit beziehungsweise der Verzögerung DELAY dem eingegebenen Befehl. Wünscht der Bediener also den Motor einzuschalten, so wird der Einbefehl bei gleichzeitiger Anzeige am Bildschirm (Simulierbild) über das Software-Programm des Motor zugeleitet. Der Bediener muss nun nicht auf die Rückmeldung aus Steuersystem C₂ warten, er erlebt quasi eine augenblickliche, virtuell verkürzte Reaktion. c) Nach Ablauf der Verzögerung DELAY erstellt das Programm automatisch wieder die Grundstellung - die Anzeige ist wieder "echt". Abhängig von der Verriegelungsschaltung für den Motor im Steuersystem C₂ ergeben sich nun zwei Möglichkeiten: In Figur 4 wird der Einbefehl vom Steuersystem C₂ akzeptiert und als echter Zustand nach Ablauf der Verzögerung DELAY angezeigt - die Anzeige ON bleibt erhalten. In Figur 5 wird der Einbefehl vom Steuersystem C₂ nicht akzeptiert. Nach Ablauf der Verzögerung DELAY wird automatisch wieder der alte Zustand angezeigt - das System "korrigiert" quasi den nicht erlaubten Eingriff automatisch nach Ablauf der Übertragungszeit und die Anzeige ON wechselt zurück auf OFF.
   Figur 6 zeigt analog zu Figur 4 den Datenfluss (Doppellinie) mit zeitlichem Ablauf a)-->b)-->c)-->d) bei einer vom Steuersystem C₂ akzeptierten Änderung eines Sollwertes von 156 auf 330 durch den Bediener, sowie
d) eine spätere Erhöhung des Sollwertes von 330 auf 712 durch das Steuersystem C₂ selbst, zum Beispiel für einen Regler mit automatischer Sollwertführung. Auf die selbe Weise werden auch mehrstufige Eingaben zum Beispiel für Startprozeduren mit Anfahrsequenz-Rückmeldungen (siehe Figur 12), Stellgrössen oder Grenzwerte behandelt: Der Bediener sieht immer den aktuellen Anlagezustand und auf Tastendruck sofort den von ihm befohlenen Zustand ohne die Übertragungs-Reaktionszeit abzuwarten.

Figur 7 zeigt eine Mehrfachanwendung der Erfindung im Netzverbund mit den wichtigsten Programmelementen in den einzelnen Stationen. Die Bedienstation C₁ ist für das Beispiel mit drei weiteren Bedienstationen C₃, C₄ und C₅ über Empfangskanäle RECEIVE und Sendekanäle SEND mit einem Local Area Network LAN verbunden, wobei die Bediensstation C₁ wie für Figur 1 beschrieben, mit dem Steuersystem C₂ gekoppelt ist. Selbstverständlich sind auch andere Konfigurationen möglich, beispielsweise könnte das Steuersystem C₂ auch direkt mit dem Local Area Network LAN gekoppelt werden oder es existiert gar kein Steuersystem C₂ für einen Echtzeit-Datenaustausch in einem Netzwerksystem.

Alle vier Bedienstationen C₁, C₃, C₄ und C₅ erlauben, wie für Figur 1 beschrieben, eine Beeinflussung des Echtzeit-Datenabbildes mit entsprechender lokaler Simulation an der Ein/Ausgabeschnittstelle I/O der jeweils gerade bedienenden Station. Dabei können Datenabbilder an allen Bedienstationen gleichzeitig verändert werden, die zeitlich letzte Eingabe dominiert. Die nicht bedienenden Stationen empfangen das neue Echtzeit-Datenabbild jeweils ohne Simulation automatisch nach der normalen Übertragung. Dabei ist es auch möglich, dass ein Teilbild als Echtzeit-Datenabbild gerade empfangen und dargestellt wird, während ein anderer Teil desselben Bildes als Simulierbild erscheint. Unabhängig von den Eingaben beziehungsweise Simulationen an den Bedienstationen kann das Steuersystem C₂ das Echtzeit-Datenabbild jederzeit auch beeinflussen und gegebenenfalls absolut dominieren.

Auf diese Art lässt sich ein Echtzeit-Datenabbild beziehungsweise Teilbild in mehreren unabhängigen Computer und/oder Steuersystemen beeinflussen und dem Verhalten nach in Echtzeit verändern. Das Verfahren unterstützt daher Multiuser Anwendungen und bedarf keines sogenannten Record Locking für das Echtzeit-Datenabbild, da stets der zeitlich letzte, zugelassene Eingriff Gültigkeit hat.
Ferner lässt sich auf diese Weise auch ein redundantes Leit-System aufbauen, in dem von mehreren Bedien-/Überwachsstationen eine Steuereinheit über unabhängige (redundante) Kommunikationsverbindungen angesprochen werden können.

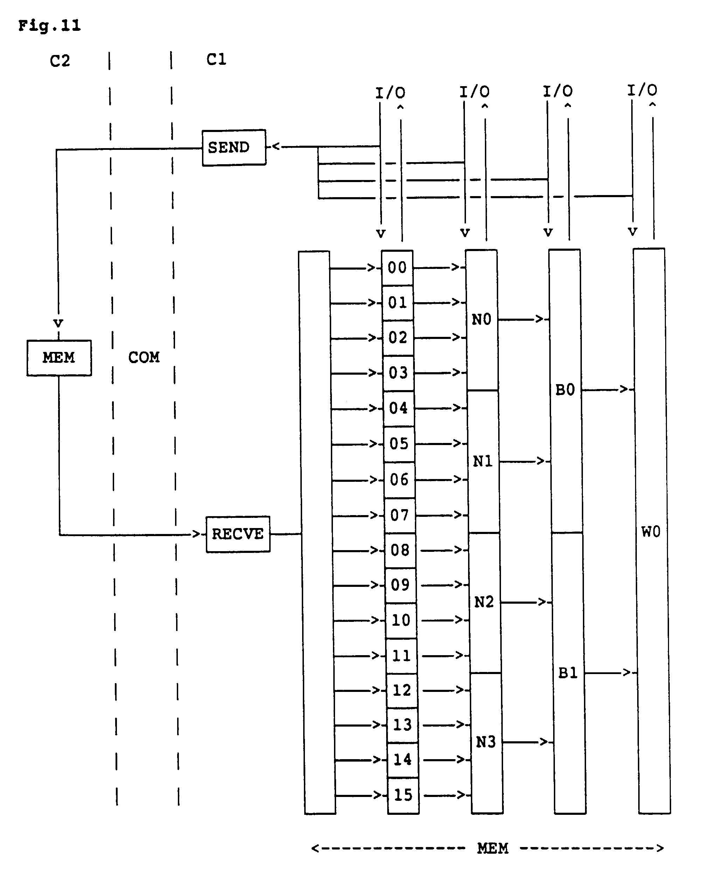

Figur 8 zeigt eine Anwendung der Erfindung für sogenanntes Multiplexed Writing mit den wichtigsten Programmelementen für Bedienstation C₁ und Steuersystem C₂. Dabei wird der Encoder ENC in Figur 1 zu einem Multiplexer MUX ausgebaut. Der Multiplexer nützt einen Sendekanal oder Speicherplatz mehrfach aus und entlastet das System, indem sämtliche zu sendenden Daten nur gerade während einer Bedienung generiert und übertragen werden, das heisst, wenn sie auch wirklich anfallen. Der Zugriff auf die Echtzeit-Daten MEM im Steuersystem C₂ wird nicht mehr vom Kommunikationsprotokoll gesteuert, sondern erfolgt dann mit einem Demultiplexer DMX im Steuersystem C₂ selbst.

Figur 9 zeigt eine Anwendung der Erfindung für Testzwecke bei unterbrochenem Datenfluss. Weil das System einen Eingriff des Bedieners an der Ein/Ausgabeschnittstelle I/O automatisch nach Ablauf der Verzögerung DELAY "korrigiert", ergibt sich bei unterbrochenem Datenfluss ein Verhalten wie für Figur 5 beschrieben. Eine unterbrochene oder willkürlich nicht in Betrieb gesetzte Kommunikation COM eignet sich daher zum Austesten von Applikationen und Kommunikationsdaten ohne Steuersystem C₂ indem jeweils Aktionen an der Ein/Ausgabeschnittstelle I/O eingegeben und kurzzeitig simuliert werden.

Figur 10 zeigt eine Anwendung der Erfindung mit intern kurzgeschlossenem Datenfluss als sogenannter Encoder/ Decoder. Bei direkter Rückführung LINK des Datenflusses aus dem Encoder ENC zum Decoder DEC mit entsprechendem Zugriff auf die codierten Daten, erhält man quasi ein Dualport RAM gemäss Figur 3 mit internem Datenumwandler, wobei Daten sowohl vorwärts wie auch rückwärts gewandelt werden können zum Beispiel Skalieren <--> Normieren oder Decodieren <--> Codieren. Die nachfolgende Code-Tabelle Tab. 1 zeigt Darstellungen für eine mögliche Datenumwandlung.

Figur 11 zeigt eine Anwendung der Erfindung mit Datenfluss für ein Mehrfach-Decoder/Encoder Programm. In diesem Fall wird für die Bedienstation C₁ ein 16-Bit Wort in Bits 00..15, Nibbles N0..N4, Bytes B0..B1 und wieder in ein Wort W0 "zerlegt" und zur Eingabe beziehungsweise Anzeige an der Ein/Ausgabeschnittstelle I/O gebracht, wobei sämtliche Elemente als Echtzeit-Daten MEM gemäss Beschreibung für Figur 1 verwendet werden können. Ein Steuersystem C₂ hat in der Regel direkten Zugriff auf einzelnen Worte, Bytes und Bits. Damit können zum Beispiel 16 Bit-Zustände oder etwa zwei Messwerte als Bytes mit einem einzigen Wort übermittelt und beidseitig beeinflusst werden. Die nachfolgende Code-Tabelle Tab. 1 zeigt weitere Darstellungen für eine mögliche Datentyp-Umwandlung.

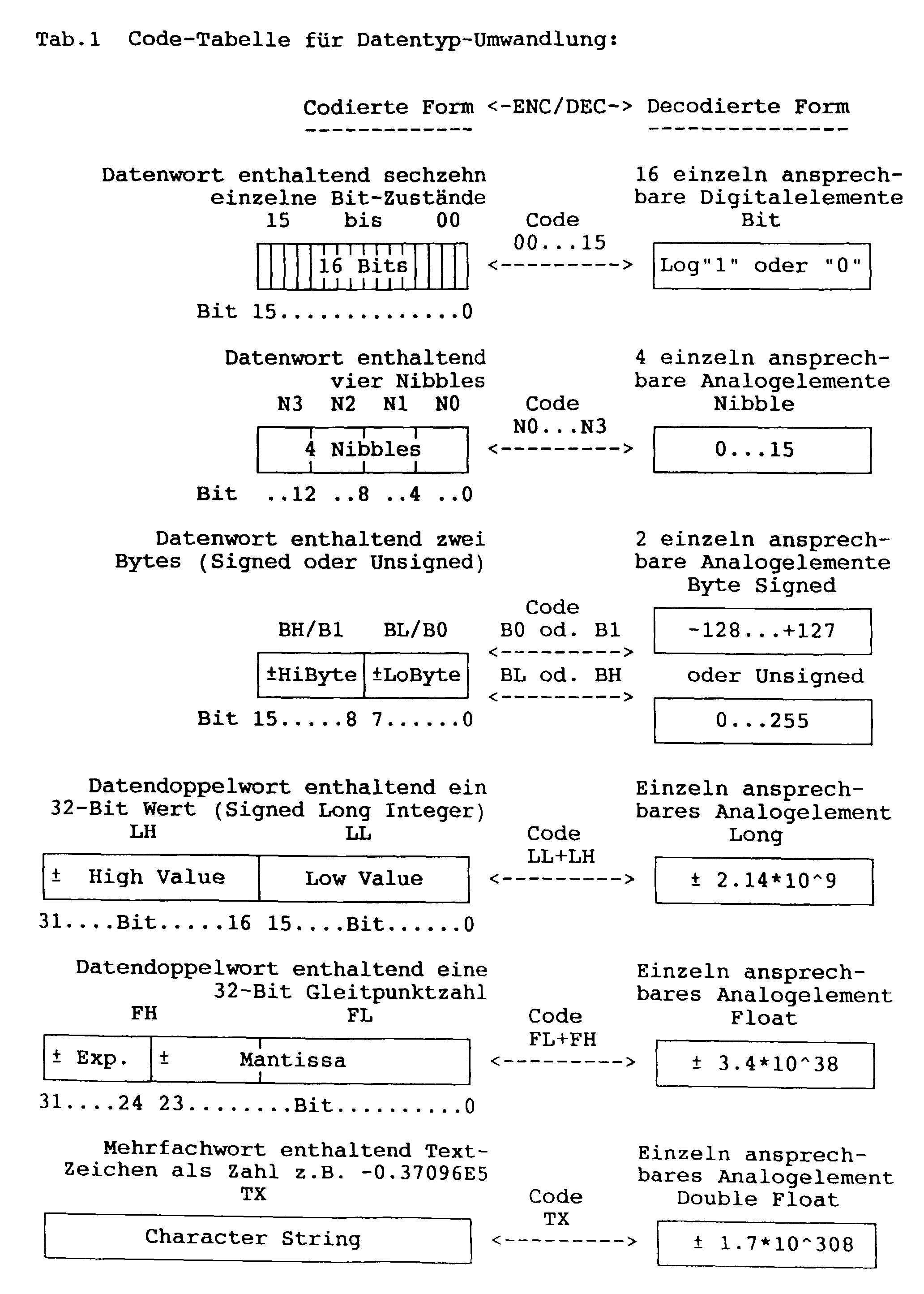

Figur 12 zeigt eine Anwendung der Erfindung gemäss Beschreibung für Figur 11 mit Datenfluss für die direkte Decodierung/Encodierung eines Nibbles (4-Bit Analogwert) zur Statusanzeige von Anlagen am Bildschirm. Dabei wird ein Anlagezustand STATUS in Form eines Nibbles N0 gemäss nachfolgender Wahrheitstabelle Tab.2 zur Anzeige gebracht.

**Tab.2**

| Wahrheitstabelle für Nibble: | | | | | |
|---|---|---|---|---|---|
| FAULT Bit 03 | RUN Bit 02 | AUTO Bit 01 | ON/OFF Bit 00 | STATUS N0 | Anlagenzustand, Bildschirmanzeige |
| 0 | 0 | 0 | 0 | 0 | Steht |
| 0 | 0 | 0 | 1 | 1 | Start |
| 0 | 0 | 1 | 0 | 2 | Steht Automatik |
| 0 | 0 | 1 | 1 | 3 | Start Automatik |
| 0 | 1 | 0 | 0 | 4 | Stop |
| 0 | 1 | 0 | 1 | 5 | Läuft |
| 0 | 1 | 1 | 0 | 6 | Stop Automatik |
| 0 | 1 | 1 | 1 | 7 | Läuft Automatik |
| 1 | 0 | 0 | 0 | 8 | Fehler |
| 1 | 0 | 0 | 1 | 9 | Fehler Start |
| 1 | 0 | 1 | 0 | 10 | Fehler Automatik |
| 1 | 0 | 1 | 1 | 11 | Fehler Automatik Start |

Der Anlagezustand STATUS kann zum Beispiel mit verschiedenen Farben oder Symbolen auf dem Bildschirm animiert werden und setzt sich aus vier Bit-Informationen 00..03 zusammen, wovon Bit 00 gleichzeitig den Ein/Ausbefehl ON/OFF darstellt und Bit 03 als Fehlermeldung weiter verarbeitet werden kann. Der Ein/Ausbefehl ON/OFF kann gegebenenfalls mit der AUTO Freigabe Bit 01 in der Bedienstation C₁ verriegelt werden, das heisst, eine Bedienung über die Ein/Ausgabeschnittstelle I/O wird nur akzeptiert, wenn das Steuersystem C₂ die entsprechende AUTO Freigabe vorgängig erteilt hat.

Der Ein/Ausgabebefehl ON/OFF wird bei erlaubter Eingabe an der Ein/Ausgabeschnittstelle I/O sowohl dem Sendekanal SEND wie auch dem entsprechenden BIT 00 und damit zur sofortigen STATUS Anzeige dem Nibble N0 zugeführt. Der Bediener sieht also auf Tastendruck zum Beispiel den simulierten Status "Start Automatik" der, sofern das Steuersystem C₂ den Befehl zulässt, nach der Übertragungszeit zum Echtzeit-Datenabbild wird, und abhängig vom weiteren Verlauf des Verarbeitungsprozesses später auf "Läuft Automatik" oder etwa "Fehler Automatik Start" wechselt (vergleiche auch Beschreibung für Figur 6).

## Patentansprüche

1. Verfahren zum bidirektionalen Datenaustausch zwischen einer Befehls-/Überwachungsstation (C₁) und einer oder mehreren zu steuernden Einheiten (C₂), wobei
a) Betriebsparameter der zu steuernden Einheiten als Echtzeit-Datenabbild (MEM) in der Befehls-/Überwachungsstation (C₁) dargestellt und
b) Steuerbefehle zur Veränderung dieser Betriebsparameter in der Befehls/Überwachungsstation (C₁) eingegeben, werden
**dadurch gekennzeichnet**, dass
c) das Echtzeit-Datenabbild (MEM) mit der Eingabe neuer Steuerbefehle in der Befehls-/Überwachungsstation (C₁) abhängig von diesen Steuerbefehlen verändert und als simuliertes Datenabbild (SIM) vom Echtzeit-Datenabbild dargestellt wird, und
d) die dem veränderten Echtzeit-Datenabbild (SIM) entsprechenden Befehle von der Befehls-/Überwachungsstation (C₁) an die zu steuernden Einheiten (C₂) übermittelt werden, wobei
e) das simulierte Datenabbild (SIM) während der Übertragung der Befehle sowie der Übertragungszeit für die Rückmeldung der veränderten Betriebsparameter für eine Zeitspanne (DELAY) erhalten bleibt und
f) die aufgrund der Befehle veränderten Betriebsparameter in die Befehls-/Überwachungsstation (C₁) zurückgemeldet werden und
g) das Echtzeit-Datenabbild nach Ablauf der Zeitspanne (DELAY) mit den veränderten Betriebsparametern auf den neuesten Stand gebracht wird.

2. Verfahren nach Anspruch 1,
**dadurch gekennzeichnet**,
dass für den Bereich der Eingabe, insbesondere während der Übertragungszeit, von dem Echtzeit-Datenabbild (MEM) ein Simulierbild (SIM) hergestellt und im simulierten Datenabbild die Veränderung zeitgleich mit der Eingabe vorgenommen wird.

3. Verfahren nach Anspruch 1 oder 2,
**dadurch gekennzeichnet**,
dass zum bidirektionalen Datenaustausch zwischen einer Befehls-/Überwachungsstation (C₁) und einer oder mehreren zu steuernden Einheit(en) (C₂) in der Befehls-/Überwachungsstation (C₁) Steuerbefehle in eine erste Ein/Ausgabe-schnittstelle (I/O₁) eingegeben und von dort an die jeweils zu steuernde(n) Einheit(en) weitergeleitet werden und IST-Betriebsparameter der zu steuernden Einheit(en) zu ihrer Echtzeitwiedergabe über die erste Ein/Ausgabe-Schnittstelle (I/O₁) an die Befehls-/Überwachungsstation (C₁) rückgemeldet werden, wobei unabhängig von den IST-Betriebsparametern eine den Steuerbefehlen gehorchende Änderung der Betriebsparameter auf einem Simulierbild (SIM) in der Befehls/Überwachungsstation (C₁) zeitgleich mit der Eingabe der Steuerbefehle simuliert wird.

4. Verfahren nach einem der Ansprüche 1 bis 3,
**dadurch gekennzeichnet**,
dass die Speicheradressen für das simulierte Datenabbild (SIM) vorzugsweise identisch sind mit den Speicheradressen für das Echtzeit-Datenabbild (MEM).

5. Verfahren nach Anspruch 1,
**dadurch gekennzeichnet**,
dass das Echtzeit-Datenabbild (MEM) aus Daten von Teilbildern und/oder mehreren Bildern besteht, wobei vorzugsweise nur die durch die Eingabe veränderten Daten im simulierten Datenabbild (SIM) bis zur Rückmeldung der tatsächlichen Werte fixiert sind, während alle übrigen Daten als Echtzeitdaten normal fortwährend aufgefrischt werden, und/oder das Echtzeit-Datenabbild auch für nicht sichtbare Bilder fortwährend aufgefrischt wird.

6. Verfahren nach Anspruch 1,
**dadurch gekennzeichnet**,
dass die Sende- und Empfangskanäle (SEND, RECVE) über den gleichen Pfad geführt werden und die Speicheradressen der Echtzeit-Daten im empfangenden Steuersystem (C₂) für Sende- und Empfangsinformation vorzugsweise identisch sind.

7. Verfahren nach Anspruch 1,
**dadurch gekennzeichnet**,
dass im Übertragungspfad sendeseitig (SEND) ein Multiplexerprogramm (MUX) zur Vielfach-Adressierung eingebaut wird, und vorzugsweise im Übertragungspfad empfangsseitig (RECVE) ein Decoder- (DEC) beziehungsweise senderseitig ein Encoderprogramm (ENC) zur Datentyp-Umwandlung oder Skalierung eingebaut wird, wobei besonders bevorzugt ein mehrfach-Decoder/Encoder Programm mit Ein/Ausgabeschnittstellen für mehrere Ebenen eingebaut ist.

8. Vorrichtung zum bidirektionalen Datenaustausch zwischen einer Befehls-/Überwachungsstation (C₁) und einer oder mehreren zu steuernden Einheiten (C₂),
a) zur Darstellung von Betriebsparametern dieser Einheiten als Echtzeit -Datenabbild (MEM) in der Befehls-/Überwachungsstation (C₁) und
b) zur Eingabe von Steuerbefehlen zur Veränderung dieser Betriebsparameter in der Befehls-/Überwachungsstation (C₁),
**dadurch gekennzeichnet**, dass
c) das Echtzeit Datenabbild (MEM) mit der Eingabe neuer Steuerbefehle in die Befehls-/Überwachungsstation abhängig von diesen Steuerbefehlen veränderbar und als simuliertes Datenabbild (SIM) vom Echtzeit-Datenabbild rstellbar ist, wobei
d) die dem veränderten Echtzeit-Datenabbild (SIM) entsprechenden Befehle an die zu steuernden Einheiten (C₂) übermittelbar sind, derart, dass
e) das simulierte Datenabbild (SIM) während der Übertragungszeit für die Rückmeldung der veränderten Betriebsparameter für eine Zeitspanne (DELAY) erhalten bleibt, wobei
f) die, aufgrund der Befehle veränderten Betriebsparamter in die Befehls -/Überwachungsstation (C₁) zurückgemeldet werden und
g) das Echtzeit-Datenabbild nach Ablauf der Zeitspanne (DELAY) mit den veränderten Betriebsparametern auf den neuesten Stand bringbar ist.

9. Vorrichtung nach Anspruch 8,
**dadurch gekennzeichnet**,
dass für den Bereich der Eingabeeinrichtung, insbesondere während der Übertragungszeit von dem Echtzeit-Datenabbild (MEM) mittels eines Software-Programmes ein Simulierbild (SIM) herstellbar und im simulierten Datenabbild die Veränderung zeitgleich mit der Eingabe vornehmbar ist.

10. Vorrichtung nach Anspruch 8 oder 9,
**gekennzeichnet** durch die folgenden Merkmale:
dass einer ersten Ein/Ausgabe-schnittstelle (I/O₁) und einer Datenübertragungseinrichtung (SW; COM), die zur Aufnahme von Steuerbefehlen aus der Befehls-/Überwachungsstation (C₁) und deren Weiterleitung an die jeweils zu steuernde(n) Einheit(en) (C₂) und zur Echtzeit-Rückmeldung der IST-Betriebsparameter der zu steuernden Einheit(en) an die Befehls-/Überwachungsstation (C₁) ausgelegt sind, ferner Simuliermittel, die - unabhängig von den IST-Betriebsparametern - eine den Steuerbefehlen gehorchende Änderung der Betriebsparameter auf einem simulierten Datenabbild (SIM) in der Befehls-/Überwachungsstation (C₁) zeitgleich mit den Eingaben der Steuerbefehle simulieren.

11. Vorrichtung nach einem der Ansprüche 8 bis 10,
**dadurch gekennzeichnet**,
dass die Eingabeeinrichtung (MEM) eine Tastatur und/oder eine sogenannte Pointing Device zur Veränderung des Echtzeit-Datenabbildes (MEM) aufweist und für die Darstellung des Echtzeit-Datenabbildes ein Bildschirm verwendet wird.

12. Vorrichtung nach einem der Ansprüche 8 bis 11,
**dadurch gekennzeichnet**,
dass ein Echtzeit-Datenabbild (MEM) für den Bereich der Haustechnik oder für eine Industrieanlage mit Echtzeit-Daten von/für Maschinen, Anlagen, Motoren und Ventilen sowie Mess-, Steuer- und Regeleinrichtungen darstellbar ist.

## Claims

1. Process for bi-directional data exchange between a command/monitoring station (C₁) and one or more units to be controlled (C₂), wherein
a) operating parameters of the units to be controlled are portrayed as a real-time data image (MEM) in the command/monitoring station (C₁) and
b) control commands for changing these operating parameters are input in the command/monitoring station (C₁),
characterised in that
c) the real-time data image (MEM) is changed with the inputting of new control commands in the command/monitoring station (C₁) as a function of these control commands and is portrayed as a simulated data image (SIM) of the real-time data image,
d) the commands corresponding to the changed real-time data image (SIM) are transmitted from the command/monitoring station (C₁) to the units (C₂) to be controlled, wherein
e) the simulated data image (SIM) is retained for a time period (DELAY) during the transmission of the commands and the transmission time for the feedback of the changed operating parameters and
f) the operating parameters changed on the basis of the commands are fed back into the command/monitoring station (C₁) and
g) the real-time data image is brought to the latest status after expiry of the time period (DELAY) with the changed operating parameters.

2. Process according to claim 1, characterised in that, for the region of the input, in particular during the transmission time, a simulated image (SIM) is produced by the real-time data image (MEM) and the change is made simultaneously with the input in the simulated data image.

3. Process according to claim 1 or 2, characterised in that, for bi-directional data exchange between a command/monitoring station (C₁) and one or more units (C₂) to be controlled in the command/monitoring station (C₁), control commands are input into a first input/output interface (I/O₁) and are conveyed from there to the respective unit(s) to be controlled and actual operating parameters of the unit(s) to be controlled are fed back for their real-time reproduction via the first input/output interface (I/O₁) to the command/monitoring station (C₁), wherein a change in the operating parameters obeying the control commands is simulated on a simulated image (SIM) in the command/monitoring station (C₁) simultaneously with the inputting of the control commands, independently of the actual operating parameters.

4. Process according to one of claims 1 to 3, characterised in that the memory addresses for the simulated data image (SIM) are preferably identical to the memory addresses for the real-time data image (MEM).

5. Process according to claim 1, characterised in that the real-time data image (MEM) consists of data of partial images and/or several images, wherein only the data changed by the input are preferably fixed in the simulated data image (SIM) until the actual values are fed back whereas all other data is continuously refreshed normally as real-time data and/or the real-time data image is also continuously refreshed for invisible images.

6. Process according to claim 1, characterised in that the send and receive channels (SEND, RECVE) are guided via the same path and the memory addresses of the real-time data are preferably identical in the receiving control system (C₂) for send and receive information.

7. Process according to claim 1, characterised in that a multiplexer program (MUX) for multiple addressing is incorporated in the transmission path on the send side (SEND) and a decoder (DEC) program is preferably incorporated in the transmission path on the receive side (RECVE) and an encoder program (ENC) on the send side for modification or scaling of data type, a multiple decoder/encoder program with input/output interfaces particularly preferably being incorporated for several planes.

8. Apparatus for bi-directional data exchange between a command/monitoring station (C₁) and one or more units (C₂) to be controlled,
a) for portraying operating parameters of these units as a real-time data image (MEM) in the command/monitoring station (C₁) and
b) for inputting control commands for changing these operating parameters in the command/monitoring station (C₁),
characterised in that
c) the real-time data image (MEM) can be changed with the inputting of new control commands into the command/monitoring station as a function of these control commands and can be portrayed as a simulated data image (SIM) of the real-time data image, wherein
d) the commands corresponding to the changed real-time data image (SIM) can be transmitted to the units (C₂) to be controlled in such a way that
e) the simulated data image (SIM) is retained for a time period (DELAY) during the transmission time for the feedback of the changed operating parameters, wherein
f) the operating parameters changed on the basis of the commands are fed back into the command/monitoring station (C₁) and
g) the real-time data image can be brought to the latest status after expiry of the time period (DELAY) with the changed operating parameters.

9. Apparatus according to claim 8, characterised in that a simulation image (SIM) can be produced by means of a software program for the region of the input device, in particular during the transmission time of the real-time data image (MEM) and the change can be carried out simultaneously with inputting in the simulated data image.

10. Apparatus according to claim 8 or 9, characterised by the following features:
that a first input/output interface (I/O₁) and a data transmission device (SW; COM) which are designed for picking up control commands from the command/monitoring station (C₁) and to convey them to the respective unit(s) to be controlled (C₂) and for real-time feedback of the actual operating parameters of the unit(s) to be controlled to the command/monitoring station (C₁), also simulation means which simulate a change in the operating parameters obeying the control commands - independently of the actual operating parameters - on a simulated data image (SIM) in the command/monitoring station (C₁) simultaneously with the inputting of the control commands.

11. Apparatus according to one of claims 8 to 10, characterised in that the input device (MEM) has a keyboard and/or a so-called pointing device for changing the real-time data image (MEM) and a video screen is used for portraying the real-time data image.

12. Apparatus according to one of claims 8 to 11, characterised in that a real-time data image (MEM) can be portrayed for the field of domestic technology or for an industrial installation with real-time data of/for machines, installations, engines and valves as well as measuring, control and adjusting devices.

## Revendications

1. Procédé pour l'échange bidirectionnel de données entre une station d'instruction/contrôle (C1) et une ou plusieurs unités (C2) à commander
a) les paramètres de service des unités à commander étant représentés sous la forme d'image des données en temps réel (MEM) dans la station d'instruction/contrôle (C1) et
b) les instructions de commande pour la modification de ces paramètres de service étant entrées dans la station d'instruction/contrôle (C1),
caractérisé en ce que
c) l'image des données en temps réel (MEM) varie avec l'entrée de nouvelles instructions de commande dans la station d'instruction/contrôle (C1) en fonction de ces instructions de commande et est représentée comme une image des données simulée (SIM) de l'image des données en temps réel, et
d) les instructions correspondant à l'image des données en temps réel (SIM) modifiée sont transmises de la station d'instruction/contrôle (C1) aux unités (C2) à commander,
e) l'image des données simulée (SIM) étant conservée pour un laps de temps (DELAY) pendant la transmission des instructions et la durée du transfert pour le retour des paramètres de service modifiés et
f) les paramètres de service modifiés à la suite des instructions étant retournés à la station d'instruction/contrôle (C1) et
g) l'image des données en temps réel étant actualisée après l'expiration du laps de temps (DELAY) avec les paramètres de service modifiés.

2. Procédé selon la revendication 1, caractérisé en ce qu'on établit une image de simulation (SIM) pour la plage de l'entrée, en particulier pendant le temps de transmission, à partir de l'image des données en temps réel (MEM) et qu'on procède à la modification dans l'image des données simulée (SIM) en même temps que l'introduction.

3. Procédé selon la revendication 1 ou 2, caractérisé en ce que, pour l'échange bidirectionnel de données entre une station d'instruction/contrôle (C1) et une ou plusieurs unités (C2) à commander, des instructions de commande sont entrées à la station d'instruction/contrôle (C1) dans une première interface d'entrée/sortie (I/O1) et sont transmises de là à (aux) l'unité (unités) à commander et les paramètres de service réels de l'unité (des unités) à commander sont retournés pour leur restitution en temps réel par la première interface d'entrée/sortie (I/O1) à la station d'instruction/contrôle (C1), une modification des paramètres de service obéissant aux instructions de commande étant simulée sur une image de simulation (SIM) dans la station d'instruction/contrôle (C1) en même temps que l'entrée des instructions de commande indépendamment des paramètres de service réels.

4. Procédé selon l'une quelconque des revendications 1 à 3, caractérisé en ce que les adresses de mémoire pour l'image des données simulée (SIM) sont de préférence identiques aux adresses de mémoire pour l'image des données en temps réel (MEM).

5. Procédé selon la revendication 1, caractérisé en ce que l'image des données en temps réel (MEM) se compose de données d'images partielles et/ou de plusieurs images, de préférence seules les données modifiées par l'introduction étant fixées de préférence jusqu'au retour des valeurs réelles, tandis que toutes les autres données sont rafraîchies normalement en permanence sous la forme des données en temps réel, et/ou l'image des données en temps réel étant rafraîchie en permanence également pour des images non visibles.

6. Procédé selon la revendication 1, caractérisé en ce que les canaux d'émission et de réception (SEND, RECVE) sont guidés par le même chemin et les adresses de mémoire des données en temps réel dans le système de commande de réception (C2) sont de préférence identiques pour l'information reçue et l'information envoyée.

7. Procédé selon la revendication 1, caractérisé en ce qu'un programme de multiplexeur (MUX) pour l'adressage multiple est monté dans le chemin de transmission côté émission (SEND) et que, de préférence dans le chemin de transmission, un programme de décodeur (DEC) est monté côté réception (RECVE) et un programme d'encodeur (ENC) côté émetteur pour la conversion du type de données ou le cadrage, un programme de décodeur/encodeur multiple étant monté en particulier de préférence avec des unités d'entrée/sortie pour plusieurs niveaux.

8. Dispositif pour l'échange bidirectionnel de données entre une station d'instruction/contrôle (C1) et une ou plusieurs unités (C2) à commander
a) pour l'affichage de paramètres de service de ces unités en tant qu'image des données en temps réel (MEM) dans la station d'instruction/contrôle (C1) et
b) pour l'entrée d'instructions de service pour la modification de ces paramètres de service dans la station d'instruction/contrôle (C1),
caractérisé en ce que
c) l'image des données en temps réel (MEM) peut être modifiée avec l'entrée de nouvelles instructions de commande dans la station d'instruction/contrôle en fonction de ces instructions de commande et peut être représentée comme une image des données simulée (SIM) à partir de l'image des données en temps réel,
d) les instructions correspondant à l'image des données en temps réel (SIM) modifiée pouvant être transmises aux unités (C2) à commander, de telle façon que
e) l'image des données simulée (SIM) soit conservée pour un laps de temps (DELAY) pendant la transmission pour le retour des paramètres de service modifiés,
f) les paramètres de service modifiés en raison des instructions étant retoumés à la station d'instruction/contrôle (C1) et
g) l'image des données en temps réel étant actualisée après l'expiration du laps de temps (DELAY) avec les paramètres de service modifiés.

9. Dispositif selon la revendication 8, caractérisé en ce qu'une image de simulation (SIM) peut être établie pour la plage de l'appareil d'entrée, en particulier pendant le temps de transmission, à partir de l'image des données en temps réel (MEM) au moyen d'un logiciel et la modification peut être effectuée dans l'image de donnés simulée en même temps que l'entrée.

10. Dispositif selon la revendication 8 ou 9, caractérisé par les caractéristiques suivantes, en ce qu'il comprend une première interface d'entrée/sortie (I/O1) et un appareil de transmission de données (SW; COM) qui sont conçus pour recevoir des instructions de commande de la station d'instruction/contrôle (C1) et les transmettre à (aux) l'unité (unités) (C2) à commander respectivement et pour le retour en temps réel des paramètres de service effectifs de l'unité (des unités) à commander à la station d'instruction/contrôle (C1), également des moyens de simulation qui simulent, indépendamment des paramètres de service effectifs, une modification des paramètres de service obéissant aux instructions de commande sur une image des données (SIM) simulée dans la station d'instruction/contrôle (C1) en même temps que les entrées des instructions de commande.

11. Dispositif selon l'une quelconque des revendications 8 à 10, caractérisé en ce que appareil d'entrée (MEM) présente un clavier et/ou un Pointing Device (appareil de pointage) pour la modification de l'image des données en temps réel (MEM) et un écran est utilisé pour la représentation de l'images des données en temps réel.

12. Dispositif selon l'une quelconque des revendications 8 à 11, caractérisé en ce qu'une image des données en temps réel (MEM) peut être représentée pour le secteur de la technique domestique et pour une installation industrielle avec des données en temps réel de/pour machines, appareils, moteurs et vannes ainsi que appareils de mesurage et de contrôle.
